Europäisches Patentamt

European Patent Office

Office européen des brevets

(19)

(11) Numéro de publication : **0 423 000 B1**

# (12) FASCICULE DE BREVET EUROPEEN

(45) Date de publication du fascicule du brevet :
**12.01.94 Bulletin 94/02**

(51) Int. Cl.$^5$ : **A23K 1/16,** A23K 1/18,
A23C 19/00

(21) Numéro de dépôt : **90402766.1**

(22) Date de dépôt : **05.10.90**

(54) **Utilisation en fromagerie du lait provenant d'animaux suralimentés en acides aminés.**

(30) Priorité : **10.10.89 FR 8913184**

(43) Date de publication de la demande :
**17.04.91 Bulletin 91/16**

(45) Mention de la délivrance du brevet :
**12.01.94 Bulletin 94/02**

(84) Etats contractants désignés :
**AT BE CH DE DK ES FR GB GR IT LI LU NL SE**

(56) Documents cités :
**FR-A- 2 386 566
FR-A- 2 401 618
SCIENZA E TECNICA LATTIERO-CASEARIA,
vol. 39, no. 4, 1988, pages 280-299; C.G. CAS-
TAGNETTI et al.: "Effect on milk quality by the
use of amino acids and vegetal extracts in the
goat"**

(73) Titulaire : **RHONE-POULENC NUTRITION
ANIMALE
Avenue Edouard Vaillant
F-03600 Commentry (FR)**

(72) Inventeur : **Robert, Jean-Claude
12 rue des Mésanges
F-03310 Neris Les Bains (FR)**

(74) Mandataire : **Le Pennec, Magali et al
RHONE-POULENC SANTE Service Brevets
Santé, 20 Avenue Raymond Aron
F-92160 Antony (FR)**

## Description

La présente invention concerne une utilisation particulière d'un lait provenant d'animaux ayant reçu une alimentation supplémentée en acides aminés protégés. Cette utilisation particuliére est relative à la préparation du fromage.

Il est connu de compléter l'alimentation des vaches en adjoignant à leur nourriture de base une complémentation à base d'amines aminés essentiels qui sont principalement la lysine et la méthionine. Ces acides aminés indispensables, encore appelés limitants ne sont pas synthétisés en quantité suffisante par l'organisme à partir de la nouriture absorbée quotidiennement par la vache. La fermentation des aliments au niveau du rumen par les enzymes digestives provoque la formation de protéines dites "microbiennes" car issues de l'action des microbes situés dans le rumen. Ces protéines ainsi que celles ayant courcircuités le rumen sont digérées dans l'intestin des ruminants et fournissent les acides aminés nécessaires en qualité et en quantité pour l'entretien des ruminants et la production du lait. Pendant la lactation, la glande mammaire absorbe la part la plus importante (80 à 90 %) de la ressource naturelle en acides aminés et demande un complément en acides aminés limitants.

On a cherché à augmenter la production laitiére en ajoutant à l'alimentation classique des ruminants des compléments à base de protéines tannées ou d'acides aminés protégés.

Cette addition d'acides aminés protégés, éventuellement de la lysine et/ou de la méthionine permet une augmentation du taux des protéines du lait de vache.

*Il est connu selon la publication parue dans SCIENZA E TECNIA LATTIERO-CASEARIA pages 280-299 de complémenter l'alimentation de chèvres avec de la méthionine protégée par un filmn lipidique dont la nature n'est pas précisée. Cette alimentation complémentaire provoque une augmentation de la quantité de lait produite, une augmentation du rendement en protéines et en matières grasses ainsi qu'une augmentation de la teneur en protéines et en matière grasse du lait obtenu.*

Il a été découvert de façon tout à fait surprenant que le lait provenant *de vaches* ayant reçu une supplémentation en acides aminés protégés de préférence en lysine et/ou méthionine présentait des potentialités en fromagerie tout à fait étonnantes.

En effet, ce lait permet une augmentation de rendement notable de la quantité de caillé produite par litre de lait par rapport à une vache n'ayant pas reçu de complémentation. Le fromage présente en outre une fermeté accrue.

L'alimentation en acides aminés protégés peut se faire à l'aide d'acides aminés protégés par un polymère résistant aux conditions de pH du rumen et se libérant dans la caillette et/ou l'intestin.

Ce polymère peut être choisi parmi les mélanges de copolymères aminés basiques avec une substance hydrophobe dont le point de fusion est supérieur à 60°C et/ou un copolymère non hydrosoluble.

Le copolymére aminé basique est de préférence un copolymère à base de styrène et de vinylpyridine.

La substance hydrophobe ayant un point de fusion supérieur à 60°C est de préférence l'acide stéarique.

Le copolymère non hydrosoluble est de préférence l'éthyl-cellulose.

Le polymère protecteur de l'acide aminé peut aussi être un copolymère à base de zéïne et d'une substance hydrophobe dont le point de fusion est supérieur à 60°C et/ou d'un copolymère non hydrosoluble. La substance hydrophobe préférée et le copolymère non hydrosoluble préféré sont les mêmes que ceux décrits précédemment.

L'ensemble de ces acides aminés protégés est décrit par exemple dans les brevets EP 188 953, FR 2 401 621, FR 2 514 261, EP 260 186, FR 2 606 597, FR 2 582 909.

Ils sont inclus dans l'alimentation journalière des animaux à raison de 0 à 30 g de méthionine et 0 à 100 g de lysine, le minimum de la somme des deux aminoacides étant d'au moins 5 g par jour.

La présente invention sera plus complètement décrite à l'aide des exemples suivants.

## EXEMPLE

Les animaux expérimentaux étaient des génisses ayant 8 à 12 semaines de lactation et dont le niveau de production de lait était de 22,5 à 30,5 kg.

Le régime de base était constitué d'ensilage de maïs à volonté. Il a été complémenté par un concentré énergétique, un concentré azoté (gluten meal) et/ou par un concentré "acides aminés protégés" (traitement) ou un concentré témoin (ni acides aminés, ni produit de protection). Les concentrés ont été apportés en quantité identique pour toutes les génisses et constante tout au long de l'essai (20 g de méthionine base et 48 g de lysine base.

Ces acides aminés ont été apportés sous forme d'un mélange de méthionine enrobée et de granulés de méthionine lysine enrobée ayant les compositions suivantes :

**granulés méthionine/lysine :**

| 84 g de coeur contenant | . 59,5 % de lysine, HCl |
| | . 14,5 % de méthionine |
| | . 12 % de talc |
| | . 14 % de liant (95 % acide stéarique, |
| | . 5 % de copolymère vinyl-2 pyridylstyrène (65/35) |
| 16 g d'enrobage contenant | . 30 % de vinyl-2pyridylstyrène 65/35 |
| | . 10 % acide stéarique |
| | . 60 % de talc |

**granulés de méthionine contenant :**

| 89 g de coeur contenant | . 77,5 % de méthionine |
| | . 10 % de talc |
| | . 12,5 % de liant contenant 95 % acide stéarique, 5 % de copolymère vinyl-2 pyridylstyrène (65/35) |
| 11 g d'enrobage contenant | . 30 % de vinyl-2 pyridylstyrène 65/35 |
| | . 10 % d'acide stéarique |
| | . 60 % de talc. |

L'expérience à duré 16 semaines et a été divisée en 4 périodes de 4 semaines.

Détermination des propriétés chimiques et technologiques des laits

La mardi de la dernière semaine de chaque période, des échantillons de 1 litre environ par vache ont été prélevés à la traite du matin. Un échantillon moyen (500 ml par vache) a été constitué à chaque période pour les 4 vaches recevant le même traitement. Ce lait a été additionné de pénicilline G sodique (200 UI par litre) et a été écrémé en vue des tests technologiques.

Les paramètres technologiques ont été mesurés sur le lait écrémé au cours de sa coagulation à 35°C par action de la présure (5,2 mg de chymosine par litre) utilisée à la dose de 0,13 de chymosine par litre de lait. Ces mesures ont été faites sur du lait dont le pH a été standardisé à 6,6 (par ajout d'acide lactique) et dont l'équilibre minéral a été rétabli.

L'aptitude à la coagulation est mesurée à l'aide d'un FORMAGRAPH (FOSS ELECTRIC) et représentée par le temps de prise, le temps de raffermissement et la consistance du caillé 30 minutes après l'adjonction de la présure. Elle a été mesurée sur le lait au pH initial et au pH standardisé.

Les "rendements fromagers" en frais, en sec et en azote sont déterminés une heure après l'emprésurage par décaillage suivi immédiatement par une centrifugation.

EFFET DE L'APPORT DE LYSINE-METHIONINE
SUR L'APTITUDE FROMAGERE DES LAITS

|  | SANS ACIDES AMINES | AVEC ACIDES AMINES |
|---|---|---|
| Rendements fromagers (%) | | |
| . en frais | 18,4 | 19,3 |
| . en azote | 78,2 | 79,1 |
| . en matière sèche | 43,7 | 44,6 |
| FORMAGRAPH | | |
| - à pH initial | | |
| . temps de prise (min) | 15,0 | 15,5 |
| . temps de raffermissement (min) | 6,8 | 6,8 |
| . fermeté du caillé (mm) | 37,5 | 37,7 |
| . vitesse de coagulation : temps de prise/temps de raffermissement | 2,3 | 2,3 |
| - à pH standardisé | | |
| . temps de prise (min) | 13,8 | 14,5 |
| . temps de raffermissement (min) | 6,1 | 6,3 |
| . fermeté du caillé (mm) | 39,3 | 40,1 |
| . vitesse de coagulation : temps de prise/temps de raffermissement | 2,3 | 2,3 |

EP 0 423 000 B1

EFFET DE L'APPORT DE LYSINE-METHIONINE

+ NATURE DE L'AZOTE (COMPLEMENT DE GLUTEN DE MAIS

A 60 % DE PROTEINES) SUR L'APTITUDE FROMAGERE DU LAIT

| | SANS ACIDES AMINES | AVEC ACIDES AMINES |
|---|---|---|
| Rendements fromagers (%) | | |
| . en frais | 17,9 | 19 |
| . en azote | 77,8 | 79 |
| . en matière sèche | 42,6 | 45,1 |
| FORMAGRAPH | | |
| - à pH initial | | |
| . temps de prise (min) | 15,3 | 14,8 |
| . temps de raffermissement (min) | 7,1 | 6,8 |
| . fermeté du caillé (mm) | 36,4 | 38,2 |
| - à pH standardisé | | |
| . temps de prise (min) | 13,8 | 14,4 |
| . temps de raffermissement (min) | 6,4 | 6,6 |
| . fermeté du caillé (mm) | 38,7 | 39,2 |

**Revendications**

1. Utilisation en fromagerie de lait de vaches caractérisé en ce qu'il provient d'animaux ayant reçu une alimentation complémentée en acide aminé sous forme protégée.

2. Utilisation selon la revendication 1 caractérisée en ce que l'acide aminé est choisi parmi la lysine et/ou la méthionine.

3. Utilisation selon la revendication 1 caractérisée en ce que l'acide aminé est protégé par un polymère résistant au condition de pH du rumen et se libérant dans la caillette et/ou l'intestin.

4. Utilisation selon la revendication 2 caractérisée en ce que l'acide aminé est protégé par une couche constituée d'un copolymère aminé basique et d'une substance hydrophobe dont le point de fusion est supérieur à 60°C et/ou d'un copolymère non hydrosoluble.

5. Utilisation selon la revendication 3 caractérisée en ce que l'acide aminé est protégé par une couche constituée d'un copolymère à base de zéïne et d'une substance hydrophobe dont le point de fusion est supérieur à 60°C et/ou d'un copolymère non hydrosoluble.

**6.** Utilisation selon la revendication 4 caractérisée en ce que l'acide aminé est protégé par une couche constituée d'un copolymére styrène vinylpyridine en association avec une substance hydrophobe qui est l'acide stéarique et un copolymère non hydrosoluble qui est l'éthylcellulose.

**7.** Utilisation selon la revendication 1 caractérisée en ce que l'alimentation complémentaire est constituée de 0 à 30 g de méthionine et O à 100 g de lysine/jour sous forme protégée, le minimum de la somme des deux aminoacides étant d'au moins 5 g/jour.

**Patentansprüche**

**1.** Verwendung von Kuhmilch in der Käsebereitung, dadurch gekennzeichnet, daß sie von Tieren stammt, die eine zusätzliche Fütterung mit Aminosäuren in geschützter Form erhalten haben.

**2.** Verwendung nach Anspruch 1, dadurch gekennzeichnet, daß die Aminosäure unter Lysin und/oder Methionin ausgewählt wird.

**3.** Verwendung nach Anspruch 1, dadurch gekennzeichnet, daß die Aminosäure durch ein Polymer geschützt ist, das unter den pH-Bedingungen des Pansens widerstandsfähig ist und sich im Labmagen und/oder Darm freisetzt.

**4.** Verwendung nach Anspruch 2, dadurch gekennzeichnet, daß die Aminosäure durch eine Schicht geschützt ist, die aus einem basischen Amin-Copolymer und einer hydrophoben Substanz, deren Schmelzpunkt höher als 60 °C liegt, und/ oder einem nicht wasserlöslichen Copolymer gebildet wird.

**5.** Verwendung nach Anspruch 3, dadurch gekennzeichnet, daß die Aminosäure durch eine Schicht geschützt ist, die aus einem Copolymer auf der Basis von Zein und einer hydrophoben Substanz, deren Schmelzpunkt höher als 60 °C liegt und/oder einem nicht wasserlöslichen Copolymer gebildet wird.

**6.** Verwendung nach Anspruch 4, dadurch gekennzeichnet, daß die Aminosäure durch eine Schicht geschützt ist, die aus einem Styrol-Vinylpyridin-Copolymer in Assoziation mit einer hydrophoben Substanz, die Stearinsäure ist, und einem nicht wasserlöslichen Copolymer, das Ethylcellulose ist, gebildet wird.

**7.** Verwendung nach Anspruch 1, dadurch gekennzeichnet, daß die zusätzliche Fütterung aus 0 bis 30 g Methionin und 0 bis 100 g Lysin in geschützter Form pro Tag besteht, wobei das Minimum der Summe der zwei Aminosäuren mindestens 5 g pro Tag beträgt.

**Claims**

**1.** The use in cheese making of cow's milk which comes from animals which have received a feed complemented by amino acid in a protected form.

**2.** The use according to claim 1 in which the amino acid is chosen from lysine and/or methionine.

**3.** The use according to claim 1 in which the amino acid is protected by a polymer which is resistant to the pH condition of the rumen and is liberated in the abomasum and or the intestine.

**4.** The use according to claim 2 in which the amino acid is protected by a layer consisting of a basic amino copolymer and a hydrophobic substance the melting point of which is greater than 60°C and/or of a copolymer insoluble in water.

**5.** The use according to claim 3 in which the amino acid is protected by a layer consisting of a zein-based copolymer and a hydrophobic substance the melting point of which is greater than 60°C and/or of a copolymer insoluble in water.

**6.** The use according to claim 4 in which the amino acid is protected by a layer consisting of a styrene vinylpyridine copolymer in association with a hydrophobic substance which is stearic acid and a copolymer insoluble in water which is ethyl-cellulose.

7. The use according to claim 1 in which the complementary feed is constituted of 0 to 30 g of methionine and 0 to 100 g of lysine/day in the protected form, the minimum figure for the sum of the two amino acids being at least 5 g/day.